# FASCICULE DE BREVET EUROPEEN

(11) **EP 3 087 038 B1**
(45) Date de publication et mention de la délivrance du brevet: **17.04.2019**
(21) Numéro de dépôt: 14821197.2
(22) Date de dépôt: 23.12.2014
(51) Int. Cl.: C02F 11/18, C02F 1/02, C02F 1/34

(54) **PROCEDE D'HYDROLYSE THERMIQUE EN CONTINU DE BOUES A FORTE SICCITE**
VERFAHREN ZUR KONTINUIERLICHEN THERMISCHEN HYDROLYSE VON SCHLÄMMEN MIT HOHEM TROCKENHEITSWERT
METHOD FOR THE CONTINUOUS THERMAL HYDROLYSIS OF SLUDGE WITH A HIGH DRYNESS VALUE

(30) Priorité: 26.12.2013 FR 1363607
(43) Date de publication de la demande: 02.11.2016
(73) Titulaire: Veolia Water Solutions & Technologies Support, 94417 Saint-Maurice Cedex (FR)
(72) Inventeur: CRAMPON, Cédric, F-94500 Champigny-sur-Marne (FR); CHAUZY, Julien, F-92160 Antony (FR); DJAFER, Malik, F-92100 Boulogne-Billancourt (FR)
(74) Mandataire: Vidon Brevets & Stratégie
(86) Numéro de dépôt international: PCT/EP2014/079255
(87) Numéro de publication internationale: WO 2015/097254

(56) Documents cités:
- EP-B1- 1 198 424

## Description

### 1. Domaine de l'invention

Le domaine de l'invention est celui du traitement des boues contenant de la matière organique telles que les boues issues de stations d'épuration. Plus précisément, l'invention concerne un procédé d'hydrolyse thermique en continu de boues contenant de la matière organique, mélangées ou non avec d'autres déchets contenant de la matière organique. Ces boues ou déchets peuvent par exemple être issus du traitement des eaux usées domestiques (par exemple des boues provenant de stations d'épuration digérées ou non digérées, des graisses issues de prétraitements...), ou issus du traitement des eaux usées industrielles (par exemple eaux usées provenant de l'industrie agroalimentaire, effluent d'abattoirs, mélasses...), ou être constitués de matières de vidange de bacs à graisses. Le terme « boues » sera utilisé ci-après pour désigner ces boues et/ou déchets.

### 2. Art antérieur

Les boues provenant du traitement des eaux usées, qu'elles soient d'origine domestique ou industrielle, peuvent être traitées par voie biologique, notamment par digestion anaérobie.

L'objectif des traitements biologiques est de dégrader la matière organique contenue dans ces boues dans le but de les stabiliser, de réduire leur volume final et de récupérer de l'énergie via la production de biogaz. Toutefois, certains composés organiques sont difficilement dégradables par voie biologique. Afin de repousser les limites de dégradation des boues, il est possible de recourir à des procédés d'hydrolyse thermique. Ce traitement thermique est généralement effectué sous pression à une température supérieure à 100°C, et en pratique pouvant aller jusqu'à 220°C, pendant une période de temps prédéterminée, en pratique généralement d'une demi-heure. Grâce à un tel traitement d'hydrolyse thermique, une partie de la matière organique initialement difficilement biodégradable est transformée en composés plus facilement dégradables biologiquement.

D'une façon classique, cette dégradation biologique ultérieure se fait par digestion au sein d'un réacteur anaérobie fermé appelé digesteur. De tels digesteurs anaérobiques ne peuvent fonctionner correctement que s'ils opèrent à une température adéquate et constante, nécessitant généralement un système de chauffage, et que s'ils sont correctement brassés. Ce brassage est d'autant plus aisé que les boues entrantes dans le digesteur sont fluides, c'est-à-dire de faible viscosité.

On connaît dans l'art antérieur différents types de procédés d'hydrolyse thermique, certains étant mis en oeuvre en traitant une par une, c'est-à-dire de façon discontinue, des quantités données de boues à hydrolyser (fonctionnement en « batch») tandis que d'autres procédés sont conçus pour permettre un traitement en continu, ou à tout le moins de façon semi-continue, des boues à hydrolyser.

Parmi l'art antérieur relatif à ces dispositifs et procédés d'hydrolyse thermique, on peut citer notamment les documents de brevets WO96/09882 et WO2006/027062 qui concernent tous les deux des procédés en batch.

De tels procédés en batch présentent les inconvénients de nécessiter la gestion des cycles de traitement des différents lots de boues devant être traités, et d'un fonctionnement répétitif de certains équipements, tel que l'ouverture-fermeture de vannes par exemple, pouvant conduire à une usure prématurée. Ce mode de fonctionnement nécessite par ailleurs la gestion des cycles de vapeur vive et de vapeur flash, mais surtout d'avoir un potentiel d'énergie récupérable faible.

Parmi les techniques de traitement par hydrolyse thermique des boues en continu ou semi-continu, on peut citer les techniques décrites dans le document de brevet EP1198424 et celles décrites dans le document de brevet WO2009/121873.

Ces techniques mettent en oeuvre des échangeurs sur eau-boues concentrées hydrolysées, pour le refroidissement des boues hydrolysées avant injection dans le digesteur. En pratique, la gestion des échangeurs s'avère difficile et contraignante pour l'utilisateur puisque nécessitant des périodes d'arrêt pour maintenance et nettoyage. De plus, cette configuration est limitée en terme de concentration des boues à traiter dans la mesure où elle ne permet pas de traiter des boues ayant une siccité supérieure à 10%. Elle n'est en outre pas optimisée en terme de consommation énergétique car si les boues étaient encore plus concentrées (c'est-à-dire avec une siccité supérieure à 20% et donc une teneur en eau inférieure à 80%), le besoin en vapeur serait davantage réduit compte tenu que le volume d'eau (contenu dans les boues) à chauffer avec la vapeur serait réduit. On entend par « siccité » des boues le pourcentage en poids de matière sèche qu'elles contiennent. En effet, les boues sont des fluides composés d'un mélange de matières organiques, de matières minérales et d'eau. La siccité des boues est calculée en établissant le rapport massique entre le poids de la matière sèche et le poids total de la boue.

Dans la technique décrite dans le document de brevet WO2009/121873, les boues sont traitées en continu dans un réacteur d'hydrolyse thermique se présentant sous une forme tubulaire dans lequel de la vapeur d'eau est directement injectée.

Ce procédé présente l'avantage d'être un procédé réellement continu. Toutefois, bien qu'ayant considérablement amélioré le traitement des boues par hydrolyse thermique par rapport aux autres procédés qui existent sur le marché, il n'en présente pas moins certaines limites.

En effet, si la siccité des boues à hydrolyser introduites dans le réacteur est trop élevée, l'injection de la vapeur dans celles-ci peut s'avérer difficile. Au-delà de certaines siccités, l'hydrolyse thermique peut être incomplète, ce qui limite les performances de la digestion anaérobie prévue en aval de celle-ci.

Les procédés d'hydrolyse thermique sur boues présentant une siccité élevée se heurtent donc à la difficulté d'assurer efficacement l'injection de vapeur dans celles-ci ainsi que leur mélange avec la vapeur injectée.

Les procédés d'hydrolyse thermique fonctionnant en continu ne permettent pas actuellement de voir leur consommation énergétique optimisée car les échangeurs de chaleur conventionnels ne sont pas prévus pour traiter des fluides pâteux comme les boues. Ainsi, dans la pratique, il n'est pas envisageable d'utiliser de tels échangeurs pour récupérer la chaleur des boues hydrolysées.

On connaît toutefois des échangeurs de chaleur dits « à surface raclée » , qui sont munis d'un axe raclant permettant de pousser les boues dans l'échangeur ou en utilisant un moyen mécanique additionnel.

Cependant, si ces échangeurs peuvent en théorie fonctionner avec des boues de siccité supérieure à 10%, ils sont dans la pratique limités à des siccités de 8 à 10%. Ceci s'explique par la nature même des boues : les boues sont composées de matières organiques, de matières minérales et d'eau. La nature visqueuse, pâteuse et non homogène des boues perturbe leur écoulement. Un autre inconvénient non négligeable des échangeurs à surface raclée est qu'ils nécessitent un fluide intermédiaire, généralement de l'eau, pour réchauffer les boues entrantes ou refroidir les boues sortantes. Plus exactement, l'eau, réchauffée par les boues hydrolysées en sortie de procédé d'hydrolyse thermique, va transmettre une partie de la chaleur aux boues à traiter en entrée du procédé d'hydrolyse. Au delà de la limite de siccité maximale de 10%, les pertes de charge constatées, de l'ordre de quelques bars en fonction de la siccité des boues à traiter, et les difficultés de fonctionnement de l'échangeur rendent le procédé économiquement inintéressant.

Un autre inconvénient est que ces échangeurs sont également limités en capacité : il est donc nécessaire de mettre plusieurs échangeurs en série afin de traiter un volume suffisant. En conséquence, les consommations énergétiques des moteurs faisant fonctionner les échangeurs s'additionnent, ce qui devient pénalisant sur le plan énergétique.

Un autre désavantage de ces échangeurs à axe raclant, ou utilisant un moyen mécanique additionnel, est lié à leur maintenance. L'encrassement lié à la circulation des boues pâteuses obligent une maintenance régulière et difficile à mettre en oeuvre. Cette maintenance régulière implique soit l'arrêt complet du procédé, soit l'augmentation du nombre des échangeurs pour permettre la maintenance de certains tandis que d'autres continuent d'être en fonctionnement.

### 3. Objectifs de l'invention

L'invention a notamment pour objectif de pallier ces inconvénients de l'art antérieur.

Plus précisément, un objectif de l'invention est de fournir, dans au moins un mode de réalisation, un procédé d'hydrolyse thermique des boues permettant de traiter des boues présentant une siccité d'au moins 20%.

Un autre objectif de l'invention est de mettre en oeuvre, dans au moins un mode de réalisation, un tel procédé qui permette de réaliser des économies d'énergie par rapport aux procédés conventionnels.

L'invention a encore pour objectif de proposer un procédé de traitement des boues qui permette, dans au moins un mode de réalisation, de réaliser un préchauffage des boues tout en limitant les pertes de charge.

L'invention a également pour objectif de proposer un tel procédé qui permette, dans au moins un mode de réalisation, de faciliter la maintenance des équipements mis en oeuvre.

### 4. Exposé de l'invention

Ces objectifs, ainsi que d'autres qui apparaîtront par la suite, sont atteints à l'aide d'un procédé d'hydrolyse thermique en continu de boues à traiter contenant de la matière organique, le procédé comprenant au moins :
a. une étape de déstructuration desdites boues à traiter produisant des boues déstructurées ;
b. une étape d'hydrolyse thermique desdites boues déstructurées au sein d'un réacteur d'hydrolyse thermique produisant des boues hydrolysées ;
c. une étape de refroidissement desdites boues hydrolysées ;
   ladite étape de déstructuration consistant à :
   - introduire lesdites boues à traiter dans un mixeur dynamique; et
   - à réchauffer lesdites boues provenant dudit mixeur dynamique, ce réchauffage étant obtenu en introduisant dans un échangeur de chaleur d'une part lesdites boues provenant dudit mixeur dynamique, et d'autre part lesdites boues hydrolysées, ceci induisant ledit refroidissement.

Ainsi, l'invention permet d'augmenter la fluidité des boues à traiter en amont du procédé d'hydrolyse thermique en soumettant ces boues à un fort gradient de vitesse dans un mixeur dynamique et d'autre part en réchauffant ces boues à traiter en récupérant la chaleur des boues traitées par hydrolyse thermique, sans utiliser de fluide intermédiaire. Les inventeurs ont en effet constaté que soumettre les boues à une forte contrainte de cisaillement permettait de casser la structure des boues, de baisser leur viscosité et donc de les fluidifier. La combinaison de la déstructuration mécanique et de l'action positive sur la viscosité des boues par la chaleur permet de fluidiser davantage les boues à traiter.

Une fois les boues fluidifiées par l'application d'un fort gradient de vitesse dans le mixeur dynamique, elles sont réchauffées via leur passage dans un échangeur de chaleur. Selon l'invention, cet échangeur de chaleur ne fonctionne pas avec un fluide intermédiaire comme ceux décrits dans l'art antérieur : cet échangeur de chaleur permet de chauffer les boues déstructurées à traiter en récupérant directement la chaleur des boues hydrolysées. En d'autres termes, un échangeur de chaleur boues/boues, comme celui proposé par l'invention, est un échangeur de chaleur dans lequel les boues à réchauffer récupèrent directement la chaleur des boues sortantes à haute température, sans utiliser de fluide caloporteur intermédiaire. Cette caractéristique présente de nombreux avantages, par exemple:
- la chaleur contribue à maintenir la faible viscosité des boues déstructurées,
- la récupération de la chaleur des boues hydrolysées, sans utiliser de fluide intermédiaire, permet de réaliser d'importantes économies d'énergie, et en particulier de diviser par deux les consommations énergétiques ;
- les boues fluidifiées circulent plus facilement dans l'échangeur de chaleur où elles poursuivent leur montée en température, diminuant davantage leur viscosité : les pertes de charge sont donc grandement limitées par rapport aux techniques existantes, l'encrassement de l'échangeur est limité.

Plus exactement, la chaleur permet de diminuer la viscosité des boues et de maintenir les boues dans un état de faible viscosité, ce qui permet d'une part de diminuer considérablement les pertes de charge dans l'échangeur de chaleur, et d'autre part de limiter l'encrassement de l'échangeur.

On notera que l'injection de vapeur seule ne suffit pas à fluidifier suffisamment les boues et ne résout pas les problèmes d'écoulement des boues dans les échangeurs de chaleur.

La présente invention prévoit donc une étape de déstructuration des boues combinant les effets de la vitesse sur la structure des boues et, éventuellement, ceux de la chaleur. L'application d'un fort taux de cisaillement sur les boues permet de casser la structure des boues, diminuant ainsi leur viscosité. Soumettre les boues à un chauffage, même modéré, permet de fluidifier davantage les boues déstructurées. Ainsi, il est plus facile de les faire passer au travers d'un échangeur de chaleur : les boues fluidifiées s'écoulent plus facilement, les pertes de charge sont considérablement réduites.

En outre, les boues sortant du réacteur d'hydrolyse présentent une température supérieure ou égale à 160°C. Récupérer leur chaleur permet de réduire considérablement la consommation énergétique du procédé. Notamment, les boues hydrolysées cèdent leur chaleur aux boues déstructurées à traiter ce qui permet d'une part de refroidir les boues hydrolysées avant de les acheminer vers une étape de traitement ultérieur, et d'autre part de chauffer les boues déstructurées à moindre coût.

Le procédé selon l'invention peut également comprendre une étape préliminaire de pompage des boues, pour introduire les boues à traiter dans le mixeur dynamique.

Dans l'invention, lesdites boues à traiter présentent une siccité d'au moins 20%, de préférence d'au moins 40%.

Dans un mode de réalisation particulièrement avantageux, ladite étape de déstructuration comprend en outre une étape d'injection de vapeur dans ledit mixeur dynamique.

L'injection de vapeur dans le mixeur dynamique, c'est à dire pendant l'étape de déstructuration par cisaillement des boues à traiter, permet de diminuer de façon significative la viscosité des boues.

Avantageusement, lesdites boues à traiter sont soumises à l'intérieur dudit mixeur dynamique à un gradient de vitesse compris entre 1500 tour/min et 4000 tour/min. Selon l'invention, le mixeur dynamique est situé en amont de l'échangeur de chaleur.

De préférence, ladite étape d'hydrolyse thermique est menée à une température comprise entre 165°C et 180°C et à une pression comprise entre 8 bar et 10 bar.

Avantageusement, ladite vapeur injectée dans ledit mixeur dynamique présente une température comprise entre 120°C et 190 °C et/ou une pression comprise entre 2 bars et 13 bars. De préférence, les boues dans ledit mélangeur dynamique présentent une température comprise entre 25°C et 55°C, de préférence comprise entre 35°C et 45°C et, de manière davantage préférée, une température d'environ 40°C. Les inventeurs ont constaté que l'injection de vapeur à 190°C permet d'obtenir une température des boues d'environ 40°C dans ledit mixeur dynamique, ce qui permet de diminuer la viscosité des boues déstructurées d'environ 60%.

Dans un mode de réalisation particulièrement avantageux, le procédé selon l'invention comprend en outre une étape consistant à réaliser simultanément l'injection de vapeur sous pression dans lesdites boues provenant dudit échangeur de chaleur et le mélange desdites boues avec ladite vapeur au moyen d'un injecteur-mélangeur dynamique de façon à obtenir un mélange uniforme de boues déstructurées chauffées à la température d'hydrolyse thermique souhaitée, ledit mélange étant acheminé dans ledit réacteur d'hydrolyse thermique..

De préférence, ladite vapeur injectée dans ledit injecteur-mélangeur dynamique présente une pression comprise entre 1 bar et 23 bars et une température comprise entre 120°C et 220 °C.

Avantageusement, ledit injecteur-mélangeur dynamique comprend un rotor, la vitesse de rotation dudit rotor étant comprise entre 500 tour/min et 2 000 tour/min. De préférence, la vitesse du rotor est d'environ 2000 tour/min.

Dans un mode de réalisation intéressant, ladite étape de refroidissement est suivie d'une étape de digestion desdites boues hydrolysées et refroidies.

L'originalité de l'invention réside également en ce que les boues hydrolysées cèdent directement leur chaleur aux boues déstructurées mécaniquement, et préchauffées dans l'échangeur de chaleur boues/boues. De cette manière, les boues déstructurées et préchauffées sont directement chauffées par les boues hydrolysées ce qui participe à augmenter leur fluidité. Les boues hydrolysées sont concomitamment ainsi refroidies et peuvent être soumises à l'étape de digestion.

Selon l'invention, qui autorise la fluidisation de boues présentant une siccité élevée, il est possible de mettre en oeuvre un échangeur de chaleur ne mettant pas en oeuvre de fluide intermédiaire (eau) : les boues hydrolysées cèdent directement leur chaleur aux boues déstructurées à traiter. Ainsi, de considérables économies d'énergie peuvent être réalisées.

Un autre objet de l'invention concerne une installation pour la mise en oeuvre d'un procédé selon l'invention comprenant :
a. des moyens d'amenées de boues à traiter ;
b. un mixeur dynamique comprenant une entrée pour lesdites boues à traiter et une sortie de boues déstructurées ;
c. un échangeur de chaleur comprenant une première entrée reliée à ladite sortie de boues déstructurées, et une sortie de boues déstructurées ;
d. un réacteur d'hydrolyse thermique comprenant une entrée reliée à ladite sortie de boues déstructurées, une entrée de vapeur sous pression et une sortie de boues hydrolysées ;
e. des moyens de recirculation desdites boues hydrolysées, lesdits moyens de recirculation étant reliés à une deuxième entrée dudit échangeur de chaleur, ledit échangeur de chaleur comprenant en outre une sortie de boues hydrolysées refroidies.

De préférence, l'installation selon l'invention comprend en outre des moyens d'injection de vapeur dans ledit mixeur dynamique. L'injection de vapeur dans le mixeur dynamique permet de diminuer la viscosité des boues déstructurées afin de les faire passer dans l'échangeur. Elle permet également d'économiser l'énergie mise en oeuvre pour faire tourner le rotor.

Dans un mode de réalisation particulièrement avantageux, l'installation selon l'invention comprend en outre un injecteur-mélangeur dynamique, ledit injecteur-mélangeur dynamique comprenant une entrée pour les boues déstructurées et préchauffées provenant dudit échangeur de chaleur, une entrée de vapeur, et une sortie d'un mélange homogène de boues déstructurées réchauffées reliées à l'entrée dudit réacteur d'hydrolyse thermique.

On notera que l'on entend dans la présente description par injecteur-mélangeur dynamique tout mélangeur constitué d'une chambre et de moyens permettant de provoquer une agitation, grâce à des moyens mécaniques motorisés, des différentes phases entrant dans cette chambre afin d'obtenir en sortie un mélange uniforme. De tels éléments peuvent, par exemple, être constitués de pales ou de vis mues par un rotor, ou de tout autre moyen de mélange également mus par un rotor. L'injecteur mélangeur dynamique permet de produire un mélange de boues déstructurées homogène. L'homogénéité du mélange contribue à l'efficacité de la réaction d'hydrolyse thermique. La vapeur injectée dans ledit injecteur-mélangeur dynamique peut être soit de la vapeur vive, soit de la vapeur recyclée. La vapeur recyclée peut, en particulier, provenir de l'étape d'hydrolyse thermique. De préférence, la vapeur injectée est de la vapeur vive.

Avantageusement, l'installation selon l'invention comprend en outre un digesteur comprenant une entrée reliée à ladite sortie de boues hydrolysées refroidies.

Dans une variante de l'invention, ledit échangeur de chaleur s'étend essentiellement verticalement ou horizontalement. De préférence, ledit échangeur de chaleur s'étend dans une direction essentiellement verticale ce qui permet d'obtenir une meilleure homogénéité de l'écoulement de la boue et donc des échanges, tout en réduisant l'empreinte au sol.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est un synoptique d'un mode de réalisation d'une installation pour la mise en oeuvre du procédé selon l'invention ;
- la figure 2 est un graphique présentant les résultats d'essais comparatifs sur la viscosité de boues traitées soit par le procédé conventionnel, soit par le procédé selon l'invention avec et sans injection de vapeur pendant l'étape de déstructuration ;
- la figure 3 est un graphique présentant les variations de la perte de charge mesurée dans un tuyau de 1,5 m /DN16 lors des essais comparatifs en lien avec la figure 2, en fonction du débit.

### 6. Description d'un mode de réalisation de l'invention

Le principe général de l'invention repose sur la mise en oeuvre d'une étape de déstructuration des boues suivie d'une étape de chauffage des boues dans un échangeur de chaleur, en amont d'un procédé d'hydrolyse thermique. L'étape de déstructuration des boues se fait en soumettant les boues à un fort gradient de vitesse, permettant de casser leur structure, éventuellement accompagné d'un préchauffage par injection de vapeur. Les boues ainsi déstructurées et éventuellement préchauffées peuvent entrer dans l'échangeur de chaleur où elles seront chauffées par la récupération de la chaleur des boues hydrolysées. Le chauffage des boues déstructurées, préchauffées ou non, permet de diminuer la viscosité ce qui permet de faire circuler les boues dans l'échangeur de chaleur en réduisant considérablement, voir en supprimant totalement, les pertes de charges au sein de l'échangeur.. Les boues ainsi déstructurées circulent plus facilement au sein des échangeurs de chaleur, les pertes de charge sont considérablement réduites. De plus, les échangeurs sont moins encrassés ce qui facilite leur maintenance.

### 6.1 Exemple de mode de réalisation d'une installation pour la mise en oeuvre du procédé selon l'invention

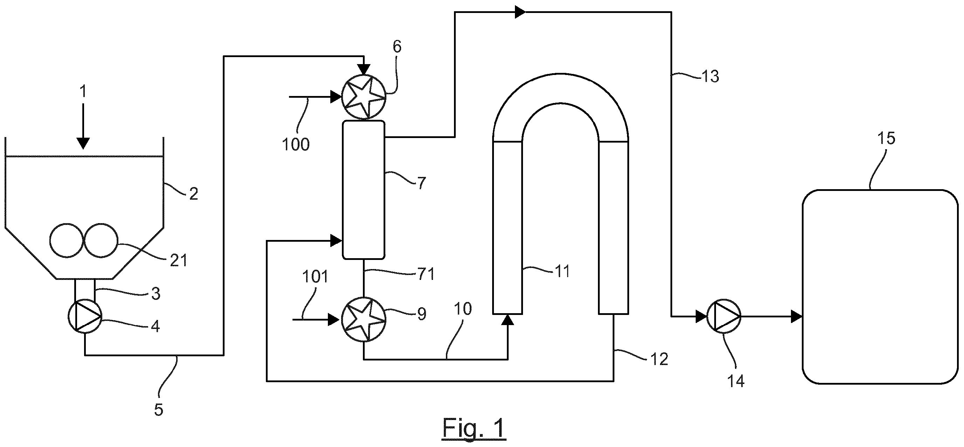

On présente, en relation avec la figure 1, un mode de réalisation d'une installation pour la mise en oeuvre du procédé selon l'invention.

Dans ce mode de réalisation, les boues déshydratées à traiter 1 sont déversées dans une trémie 2 comprenant des moyens de mélange 21 tels qu'une vis sans fin permettant d'éviter la cavitation de la pompe d'alimentation 4 qui est installée à la sortie 3 de la trémie. Toutefois, la vitesse appliquée aux boues déshydratées n'est pas suffisante pour les déstructurer et réduire leur viscosité. Les boues déshydratées sont à température ambiante, c'est à dire environ 20°C.

La pompe 4 envoie les boues déshydratées via la canalisation 5 dans un mixeur dynamique 6. Le mixeur dynamique 6 comprend un rotor tournant, dans ce mode de réalisation, à 2000 tour/min. Il est important que la vitesse du rotor soit d'au moins 1500 tour/min, de préférence entre 1500 et 4000 tour/min. Une telle vitesse permet de déstructurer les boues en éliminant les contraintes internes existant au sein des boues et par conséquent fluidifier les boues.

De manière optionnelle, de la vapeur vive 100 à une température de 190°C est injectée dans le mixeur dynamique 6. L'injection de vapeur dans le mixeur dynamique 6 permet de préchauffer les boues à une température d'environ 40°C. Cette étape de préchauffage permet également de diminuer la viscosité des boues déshydratées et déstructurées.

Les boues déstructurées et préchauffées transitent ensuite dans un échangeur de chaleur boues/boues 7. Dans l'échangeur 7 les boues préchauffées et déstructurées mécaniquement dans le mixeur dynamique circulent à contre-courant des boues hydrolysées. Ainsi les boues déstructurées sont chauffées par les boues hydrolysées qui, elles, sont en contre partie refroidies. Cet échangeur de chaleur 7 comprend une première entrée liée à la sortie du mixeur dynamique 6, et une première sortie permettant d'évacuer les boues déstructurées chauffées via une canalisation 71 reliée à un injecteur-mélangeur dynamique 9. En sortie de l'échangeur 7, les boues présentent une température comprise entre 90°C et 110°C.

De la vapeur 101 est injectée dans l'injecteur-mélangeur dynamique 9. L'injecteur-mélangeur 9 permet de chauffer à nouveau les boues afin d'élever leur température à environ 160°C, température requise pour l'hydrolyse thermique. Les boues ainsi portées à température sont envoyées par une canalisation 10 vers un réacteur d'hydrolyse thermique 11. Tel que cela est représenté sur la figure 1, le réacteur 11 présente une partie ascendante, un coude et une partie descendante.

Au sein du réacteur 11, les boues sont hydrolysées à une température d'environ 160°C et à une pression comprise entre 8 et 10 bar. Le réacteur 11 comprend une sortie reliée par une canalisation 12 à une seconde entrée de l'échangeur de chaleur 7. Cette canalisation 12 permet d'acheminer les boues hydrolysées vers l'échangeur 7 dans lequel elles cèderont leur chaleur aux boues déstructurées, ce qui leur permet d'être elles-mêmes refroidies. Les boues hydrolysées ainsi refroidies sont évacuées par une seconde sortie de l'échangeur 7 vers une étape de traitement ultérieure. En particulier, les boues hydrolysées refroidies sont envoyées via la canalisation 13 vers un digesteur 15. La canalisation peut également comprendre une pompe 14 permettant de réguler le débit de circulation des boues hydrolysées, et par conséquent de réguler, entre autres, la pression au sein du réacteur 11.

La mise en oeuvre de l'échangeur boues/boues 7 permet d'optimiser la récupération d'énergie entre les boues hydrolysées sortant du réacteur d'hydrolyse thermique et les boues à traiter entrant dans ce même réacteur, sans l'utilisation d'un fluide intermédiaire. Le procédé selon l'invention permet d'économiser beaucoup d'énergie en recyclant la chaleur de réaction d'hydrolyse thermique, c'est à dire en réinjectant en amont du procédé d'hydrolyse une partie de la chaleur récupérée en aval de cette même réaction d'hydrolyse thermique. L'étape de déstructuration comprend la déstructuration mécanique des boues en les soumettant à un fort gradient de vitesse dans le mixeur dynamique, ce qui permet de diminuer la viscosité. En parallèle, une étape de préchauffage des boues déstructurées, au sein même du mixeur dynamique, permet de diminuer davantage la viscosité des boues avant de chauffer les boues dans l'échangeur de chaleur. Ainsi, on obtient des boues considérablement fluidifiées par rapport aux techniques de l'art antérieur : l'écoulement des boues dans les équipements s'en trouve grandement facilité et les pertes de charge, notamment au niveau de l'échangeur de chaleur d'autant diminuées.

### 6.2 Essais comparatifs

Des essais comparatifs ont été menés sur des boues issues de station d'épuration. Ces boues contiennent une importante quantité de matière organique et présentent une siccité d'environ 27%.

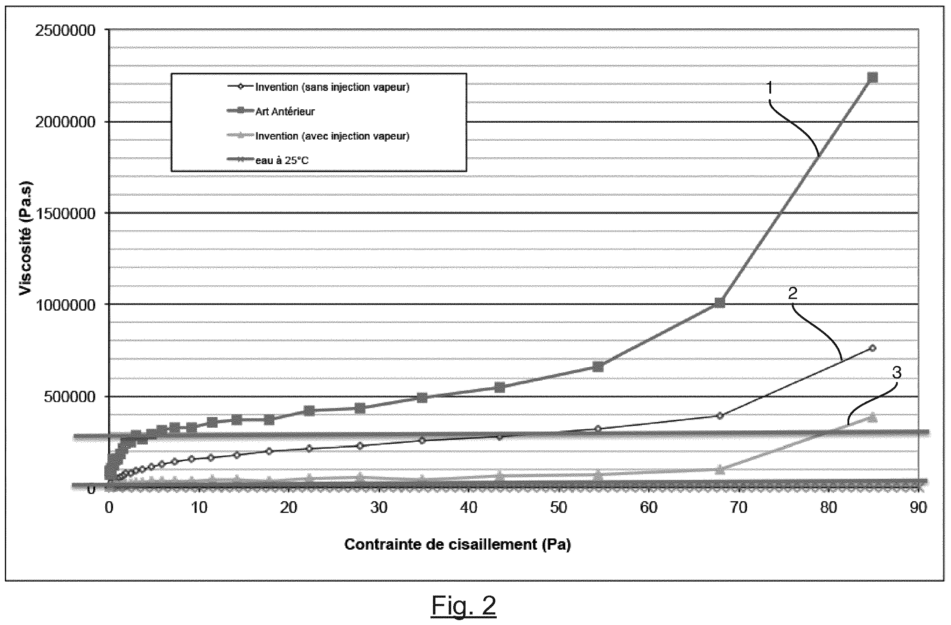

Les boues ont soit été séparées en trois lots, traités soit par :
- une méthode conventionnelle (figure 2 courbe 1) sans injection de vapeur ni étape de déstructuration mécanique;
- le procédé selon l'invention tel que décrit au paragraphe 6.1, sans injection de vapeur dans le mixeur dynamique 6 (figure 2 courbe 2) ; ou
- le procédé selon l'invention tel que décrit au paragraphe 6.1, avec injection de vapeur à 190°C dans le mixeur dynamique 6, pour porter la température des boues à traiter à 40°C (figure 2 courbe 3) .

Dans un premier temps, la viscosité des boues en entrée du réacteur d'hydrolyse 11 a été mesurée. Comme on peut l'observer, les boues se comportent comme des fluides thixotropes rhéo-épaississants, à savoir que la viscosité augmente avec la contrainte de cisaillement. Cependant, quelle que soit la contrainte appliquée, on observe sur ce graphique que la diminution de viscosité se situe toujours dans les mêmes proportions. Toutefois, les courbes 2 et 3 de la figure 2, conformes à l'invention, indiquent une viscosité inférieure aux boues traitées par la méthode classique selon l'art antérieur (courbe 1). L'étape de déstructuration permet donc de réduire considérablement les contraintes internes existant dans les boues. L'étape d'injection de vapeur à 190°C pour chauffer les boues à 40°C permet d'améliorer la viscosité des boues mais ne suffit pas, seule, à résoudre le problème de viscosité observée. L'étape de déstructuration permet de réduire considérablement la viscosité des boues.

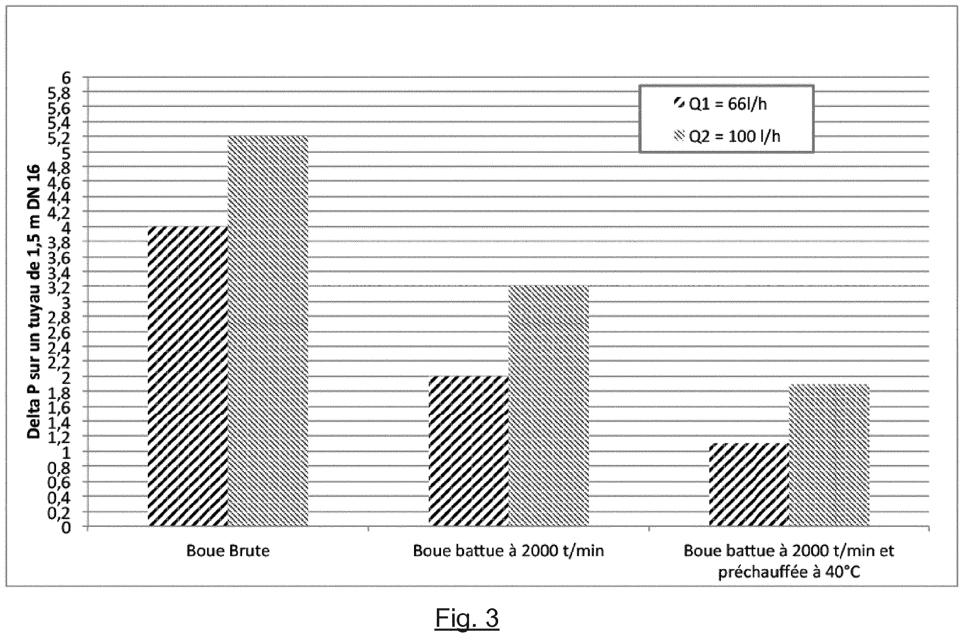

Les variations de la perte de charge dans un tuyau de 1,5 m et de diamètre nominal (DN) 16 mm, ont été évaluées sur les trois lots de boues traités dans les conditions de la figure 3 (boue brute, boues battues à 2000 tour/min et boues battues à 2000 tour/min et préchauffées à 40 °C). Le débit de circulation des boues dans la tuyau a été modifié afin d'évaluer l'impact de ce paramètre sur la perte de charge. Les boues ont donc circulés soit à un débit Q1 de 66L/h soit à un débit Q2 de 100 L/h. Comme on peut l'observer sur la figure 3, plus le débit est élevé, plus la perte de charge augmente. Un autre point important est que le procédé selon l'invention permet de diminuer les pertes de charge d'un facteur 2 par rapport à la méthode conventionnelle. La combinaison de l'injection de vapeur dans le mixeur dynamique permet de diminuer les pertes de charge d'un facteur 4 par rapport à la méthode conventionnelle. Par conséquent, le procédé selon l'invention permet de réduire considérablement la viscosité et les pertes de charge au travers de l'échangeur.

## Revendications

1. Procédé d'hydrolyse thermique en continu de boues à traiter contenant de la matière organique et présentant une siccité d'au moins 20%, le procédé comprenant au moins :
a. une étape de déstructuration desdites boues à traiter produisant des boues déstructurées ;
b. une étape d'hydrolyse thermique desdites boues déstructurées au sein d'un réacteur d'hydrolyse thermique produisant des boues hydrolysées ;
c. une étape de refroidissement desdites boues hydrolysées ;
ladite étape de déstructuration consistant à :
- introduire lesdites boues à traiter dans un mixeur dynamique à l'intérieur duquel lesdites boues sont soumises à un gradient de vitesse compris entre 1500 tour/min et 4000 tour/min;
- à réchauffer lesdites boues provenant dudit mixeur dynamique, ce réchauffage étant obtenu en introduisant dans un échangeur de chaleur d'une part lesdites boues provenant dudit mixeur dynamique, et d'autre part lesdites boues hydrolysées, ceci induisant ledit refroidissement.

2. Procédé selon la revendication 1, **caractérisé en ce que** ladite étape de déstructuration comprend en outre une étape d'injection de vapeur dans ledit mixeur dynamique.

3. Procédé selon la revendication 1 ou 2, **caractérisé en ce que** lesdites boues à traiter sont soumises à l'intérieur dudit mixeur dynamique à un gradient de vitesse compris entre 1500 tour/min et 2000 tour/min.

4. Procédé selon l'une quelconque des revendications 1 à 3, **caractérisé en ce que** ladite vapeur injectée dans ledit mixeur dynamique présente une température comprise entre 120°C et 190°C et/ou une pression comprise entre 2 bar et 13 bar.

5. Procédé selon l'une quelconque des revendications 1 à 4, **caractérisé en ce qu'**il comprend une étape consistant à réaliser simultanément l'injection de vapeur sous pression dans lesdites boues provenant dudit échangeur de chaleur et le mélange desdites boues avec ladite vapeur au moyen d'un injecteur-mélangeur dynamique de façon à obtenir un mélange uniforme de boues déstructurées et chauffées à la température d'hydrolyse thermique souhaitée, ledit mélange étant acheminé dans ledit réacteur d'hydrolyse thermique.

6. Procédé selon la revendication 5, **caractérisé en ce que** ladite vapeur injectée dans ledit injecteur-mélangeur dynamique présente une pression comprise entre 1 bar et 23 bar et /ou une température comprise entre 100°C et 220°.

7. Procédé selon l'une quelconque des revendications 1 à 6, **caractérisé en ce que** ledit injecteur - mélangeur dynamique comprend un rotor, la vitesse de rotation dudit rotor pendant ladite étape de déstructuration étant comprise entre 500 tour.min⁻¹ et 2 000 tour.min⁻¹.

8. Procédé selon l'une quelconque des revendications 1 à 7, **caractérisé en ce que** lesdites boues à traiter présentent une siccité d'au moins 40%.

9. Procédé selon l'une quelconque des revendication 1 à 8, **caractérisé en ce que** ladite étape de refroidissement est suivie d'une étape de digestion desdites boues hydrolysées et refroidies.

10. Installation pour la mise en oeuvre d'un procédé selon l'une quelconques des revendications 1 à 9 comprenant :
a. des moyens d'amenées (5) de boues à traiter présentant une siccité d'au moins 20% ;
b. un mixeur dynamique (6) comprenant une entrée pour lesdites boues à traiter et une sortie de boues déstructurées, à l'intérieur duquel lesdites boues sont soumises à un gradient de vitesse compris entre 1500 tour/min et 4000 tour/min;
c. un échangeur de chaleur (7) comprenant une première entrée reliée à ladite sortie de boues déstructurées, et une sortie de boues déstructurées chauffées ;
d. un réacteur d'hydrolyse thermique (11) comprenant une entrée reliée à ladite sortie de boues déstructurées chauffées, une entrée de vapeur sous pression et une sortie de boues hydrolysées ;
e. des moyens de recirculation (12) desdites boues hydrolysées, lesdits moyens de recirculation étant reliés à une deuxième entrée dudit échangeur de chaleur, ledit échangeur de chaleur comprenant en outre une sortie de boues hydrolysées refroidies.

11. Installation selon la revendication 10, **caractérisé en ce qu'**elle comprend des moyens d'injection (100) de vapeur dans ledit mixeur dynamique (6).

12. Installation selon l'une quelconque des revendications 10 ou 11, **caractérisée en ce qu'**elle comprend un injecteur-mélangeur dynamique (9), ledit injecteur-mélangeur dynamique (9) comprenant une entrée pour les boues déstructurées provenant dudit échangeur de chaleur, une entrée de vapeur (101), et une sortie d'un mélange homogène de boues déstructurées réchauffées reliées à l'entrée dudit réacteur d'hydrolyse thermique.

13. Installation selon l'une des revendications 10 à 12, comprenant en outre un digesteur (15) comprenant une entrée reliée à ladite sortie de boues hydrolysées refroidies.

14. Installation selon l'une des revendications 10 à 13, **caractérisé en ce que** ledit échangeur de chaleur (9) s'étend essentiellement verticalement ou horizontalement

## Patentansprüche

1. Verfahren zur kontinuierlichen thermischen Hydrolyse von zu behandelnden Schlämmen, enthaltend organisches Material und aufweisend einen Trockenheitswert von mindestens 20 %, wobei das Verfahren mindestens Folgendes umfasst:
a. einen Schritt des Destrukturierens der zu behandelnden Schlämme, wodurch destrukturierte Schlämme erzeugt werden;
b. einen Schritt des thermischen Hydrolysierens der destrukturierten Schlämme innerhalb eines Reaktors zur thermischen Hydrolyse, wodurch hydrolysierte Schlämme hergestellt werden;
c. einen Schritt des Abkühlens der hydrolysierten Schlämme;
wobei der Schritt des Destrukturierens darin besteht:
- die zu behandelnden Schlämme in einen dynamischen Mixer einzuführen, in dessen Inneren die Schlämme einem Geschwindigkeitsgradienten unterzogen werden, der im Bereich zwischen 1500 Udr/min und 4000 Udr/min liegt;
- die Schlämme, die aus dem dynamischen Mixer stammen, zu erhitzen, wobei diese Erhitzung erzielt wird, indem in einen Wärmetauscher einerseits die Schlämme, die aus dem dynamischen Mixer stammen, und andererseits die hydrolysierten Schlämme eingeführt werden, wodurch die Abkühlung herbeigeführt wird.

2. Verfahren nach Anspruch 1, **dadurch gekennzeichnet, dass** der Schritt des Destrukturierens außerdem einen Schritt des Injizierens von Dampf in den dynamischen Mixer umfasst.

3. Verfahren nach Anspruch 1 oder 2, **dadurch gekennzeichnet, dass** die zu behandelnden Schlämme im Inneren des dynamischen Mixers einem Geschwindigkeitsgradienten unterzogen werden, der im Bereich zwischen 1500 Udr/min und 2000 Udr/min liegt.

4. Verfahren nach einem der Ansprüche 1 bis 3, **dadurch gekennzeichnet, dass** der Dampf, injiziert in den dynamischen Mixer, eine Temperatur aufweist, die im Bereich zwischen 120 ºC und 190 ºC liegt, und/oder einen Druck, der im Bereich zwischen 2 bar und 13 bar liegt.

5. Verfahren nach einem der Ansprüche 1 bis 4, **dadurch gekennzeichnet, dass** es einen Schritt umfasst, der darin besteht, gleichzeitig die Injektion von Dampf unter Druck in die Schlämme, die aus dem Wärmetauscher stammen, und die Mischung der Schlämme mit dem Dampf mit Hilfe eines dynamischen Injektor-Mischers derart durchzuführen, dass eine gleichförmige Mischung von destrukturierten und erhitzten Schlämmen bei der gewünschten Temperatur der thermischen Hydrolyse erhalten wird, wodurch die Mischung in den Reaktor zur thermischen Hydrolyse geschickt wird.

6. Verfahren nach Anspruch 5, **dadurch gekennzeichnet, dass** der Dampf, injiziert in den dynamischen Injektor-Mischer, einen Druck aufweist, der im Bereich zwischen 1 bar und 23 bar liegt, und/oder eine Temperatur, die im Bereich zwischen 100 ºC und 220 ºC liegt.

7. Verfahren nach einem der Ansprüche 1 bis 6, **dadurch gekennzeichnet, dass** der dynamische Injektor-Mischer einen Rotor umfasst, wobei die Drehgeschwindigkeit des Rotors während des Schritts des Destrukturierens im Bereich zwischen 500 Udr.min⁻¹ und 2000 Udr.min⁻¹ liegt.

8. Verfahren nach einem der Ansprüche 1 bis 7, **dadurch gekennzeichnet, dass** die zu behandelnden Schlämme einen Trockenheitswert von mindestens 40 % aufweisen.

9. Verfahren nach einem der Ansprüche 1 bis 8, **dadurch gekennzeichnet, dass** dem Schritt des Abkühlens ein Schritt des Faulens der hydrolysierten und abgekühlten Schlämme folgt.

10. Anlage zur Durchführung eines Verfahrens nach einem der Ansprüche 1 bis 9, umfassend:
a. Mittel zur Zufuhr (5) von zu behandelnden Schlämmen, die einen Trockenheitswert von mindestens 20 % aufweisen;
b. einen dynamischen Mixer (6), umfassend einen Eingang für die zu behandelnden Schlämme und einen Ausgang von destrukturierten Schlämmen, in dessen Inneren die Schlämme einem Geschwindigkeitsgradienten unterzogen werden, der im Bereich zwischen 1500 Udr/min und 4000 Udr/min liegt;
c. einen Wärmetauscher (7), umfassend einen ersten Eingang, der mit dem Ausgang von destrukturierten Schlämmen verbunden ist, und einen Ausgang von erhitzten destrukturierten Schlämmen;
d. einen Reaktor zur thermischen Hydrolyse (11), umfassend einen Eingang, der mit dem Ausgang von destrukturierten erhitzten Schlämmen verbunden ist, einen Eingang von Dampf unter Druck und einen Ausgang von hydrolysierten Schlämmen;
e. Mittel zur Rezirkulierung (12) der hydrolysierten Schlämme, wobei die Mittel zur Rezirkulierung mit einem zweiten Eingang des Wärmetauschers verbunden ist, wobei der Wärmetauscher außerdem einen Ausgang von abgekühlten hydrolysierten Schlämmen umfasst.

11. Anlage nach Anspruch 10, **dadurch gekennzeichnet, dass** sie Mittel zur Injektion (100) von Dampf in den dynamischen Mixer (6) umfasst.

12. Anlage nach einem der Ansprüche 10 oder 11, **dadurch gekennzeichnet, dass** sie einen dynamischen Injektor-Mischer (9) umfasst, wobei der dynamische Injektor-Mischer (9) einen Eingang für die destrukturierten Schlämme umfasst, die aus dem Wärmetauscher stammen, einen Dampfeingang (101) und einen Ausgang einer homogenen Mischung aus erhitzten destrukturierten Schlämmen, die mit dem Eingang des Reaktors zur thermischen Hydrolyse verbunden sind.

13. Anlage nach einem der Ansprüche 10 bis 12, umfassend außerdem eine Faulanlage (15), umfassend einen Eingang, der mit dem Ausgang von abgekühlten hydrolysierten Schlämmen verbunden ist.

14. Anlage nach einem der Ansprüche 10 bis 13, **dadurch gekennzeichnet, dass** sich der Wärmetauscher (9) im Wesentlichen vertikal oder horizontal erstreckt.

## Claims

1. Method for the continuous thermal hydrolysis of sludge to be treated and having a dry content of at least 20 % containing organic matter, the method comprising at least:
a. a step for de-structuring said sludge to be treated producing de-structured sludge;
b. a step for the thermal hydrolysis of said de-structured sludge within a thermal hydrolysis reactor producing hydrolyzed sludge;
c. a step for cooling said hydrolyzed sludge;
said step for de-structuring consisting in:
- introducing said sludge to be treated into a dynamic mixer into which said sludge is subjected to a speed gradient of 1500 rpm to 4000 rpm;
- heating said sludge coming from said dynamic mixer, this heating being obtained by the introduction, into a heat exchanger, on the one hand of said sludge coming from said dynamic mixer and, on the other hand, of said hydrolyzed sludge, this introduction inducing said cooling.

2. Method according to claim 1, **characterized in that** said step for de-structuring furthermore comprises a step for injecting steam into said dynamic mixer.

3. Method according to claim 1 or 2, **characterized in that** said sludge to be treated is subjected within said dynamic mixer to a speed gradient of 1500 rpm to 2000 rpm.

4. Method according to any one of the claims 1 to 3, **characterized in that** said steam injected into said dynamic mixer has a temperature of 120°C to 190°C and/or a pressure of 2 bar to 13 bar.

5. Method according to any one of the claims 1 to 4, **characterized in that** it comprises a step for carrying out, simultaneously, the injection of steam under pressure into said sludge coming from said heat exchanger and the mixing of said sludge with said steam by means of a dynamic injector-mixer so as to obtain a uniform mixture of sludge de-structured and heated to the desired temperature of thermal hydrolysis, said mixture being conveyed into said thermal hydrolysis reactor.

6. Method according to claim 5, **characterized in that** said steam injected into said dynamic injector-mixer has a pressure of 1 bar to 23 bars, and/or a temperature of 100°C to 220°C.

7. Method according to any one of the claims 1 to 6, **characterized in that** said dynamic injector-mixer comprises a rotor, the rotation speed of said rotor during said step for de-structuring ranging from 500 rpm⁻¹ to 2000 rpm⁻¹.

8. Method according to any one of the claims 1 to 7, **characterized in that** said sludge to be treated has a dry content of at least 40%.

9. Method according to any one of the claims 1 to 8, **characterized in that** said step for cooling is followed by a step for digesting said hydrolyzed and cooled sludge.

10. Plant for implementing a method according to any one of the claims 1 to 9 comprising:
a. means (5) for conveying sludge having a dry content of at least 20 % to be treated;
b. a dynamic mixer (6) comprising an inlet for said sludge to be treated and an outlet for de-structured sludge, into which said sludge is subjected to a speed gradient of 1500 rpm to 4000 rpm;
c. a heat exchanger (7) comprising a first inlet connected to said outlet of said de-structured sludge and an outlet of heated de-structured sludge;
d. a thermal hydrolysis reactor (11) comprising an inlet connected to said outlet of heated de-structured sludge, an inlet of steam under pressure and an outlet of hydrolyzed sludge;
e. means (12) for recirculating said hydrolyzed sludge, said means for recirculating being connected to a second inlet of said heat exchanger, said heat exchanger furthermore comprising an outlet of cooled hydrolyzed sludge.

11. Plant according to claim 10, **characterized in that** it comprises means (100) for injecting steam into said dynamic mixer (6).

12. Plant according to any one of the claims 10 or 11, **characterized in that** it comprises a dynamic injector-mixer (9), said dynamic injector-mixer (9) comprising an inlet for the de-structured sludge coming from said heat exchanger, a steam inlet (101) and an outlet for a homogenous mixture of heated de-structured sludge connected to the inlet of said thermal hydrolysis reactor.

13. Plant according to one of the claims 10 to 12, furthermore comprising a digester (15) comprising an inlet connected to said outlet of cooled hydrolyzed sludge.

14. Plant according to one of the claims 10 to 13, **characterized in that** said heat exchanger (9) extends essentially vertically or horizontally.
